# FASCICULE DE BREVET EUROPEEN

(11) **EP 1 594 794 B1**
(45) Date de publication et mention de la délivrance du brevet: **27.12.2006**
(21) Numéro de dépôt: 03815815.0
(22) Date de dépôt: 08.07.2003
(51) Int. Cl.: B67C 3/00, B29C 45/44, B29C 45/40

(54) **BOUCHON A OBTURATEUR POUR BIDON ET METHODE DE FABRICATION DE CE BOUCHON**
VERSCHLUSSSTOPFEN FÜR EINEN KANISTER SOWIE VERFAHREN ZUR DESSEN HERSTELLUNG
CLOSURE STOPPER FOR A WATER BOTTLE AND METHOD OF MANUFACTURING SUCH A STOPPER

(30) Priorité: 11.02.2003 CA 2418456
(43) Date de publication de la demande: 16.11.2005
(73) Titulaire: Crealise Packaging Inc., Rawdon, Québec J0K 1S0 (CA)
(72) Inventeur: PERRIN, Gérard, F-69330 Meyzieu (FR); PIONCHON, Henri, F-69006 Lyon (FR)
(74) Mandataire: Maureau, Philippe
(86) Numéro de dépôt international: PCT/CA2003/001026
(87) Numéro de publication internationale: WO 2004/071932

(56) Documents cités:
- WO-A-02/060808
- FR-A- 2 822 810
- US-A- 5 222 530
- US-A- 5 909 827
- US-B1- 6 177 041

## Description

### DOMAINE DE L'INVENTION

La présente invention a pour objet un bouchon à obturateur spécialement adapté à la fermeture du goulot des bidons d'eau, généralement de 11,355 ou 18,925 l (3 ou 5 gallons), utilisables en position renversée sur des machines distributrices d'eau (également appelés « fontaines à eau »).

L'invention a également pour objet une méthode de fabrication de ce bouchon à obturateur en une seule injection de matière plastique dans un moule spécialement conçu à cet effet.

### ARRIÈRE-PLAN TECHNOLOGIQUE

Des bouchons à obturateur du type ci-dessus mentionné, ont déjà été décrits. A ce sujet, on peut se référer au brevet américain US 5 222 530 de 1993 et son équivalent européen EP 0 641 713 B1 de 1997, tous deux délivrés au nom d'ELKAY MANUFACTURING CO. avec désignation de Henry E. BAKER et coll. comme inventeurs.

Les bouchons à obturateur de ce type sont extrêmement intéressants mais présentent une difficulté de fabrication en une seule injection, sans avoir à procéder à des soudures par ultrason ou autres. A ce sujet, on peut se référer aux commentaires faits dans le préambule du brevet américain US 5 392 939 de 1995 au nom de Walter E. HIDDING et al, où, dans la colonne 2, lignes 3 à 20, il est fait référence au problème de moulage du bouchon décrit dans le brevet américain US 5121 778 de 1992 au nom de ELKAY MANUFACTURING CO. qui dérive de la même demande de base que le brevet US 5 222 530 ci-dessus mentionné, et où on conclut à l'impossibilité de l'injection en une seule pièce.

La demande internationale WO 02/060808 A1 publiée en 2002 au nom de W. KRASKA décrit un bouchon à obturateur selon le préambule de la revendication 1 du même type que précédemment discuté, ainsi qu'une méthode pour fabriquer ce bouchon par injection en une seule pièce. Toutefois, un problème potentiel avec la méthode proposée dans cette demande internationale est qu'on ne peut pas nécessairement obtenir toutes les angulations et la constance du mince de déchirement circulaire, ainsi que des courbures requises pour que le fût du bouchon soit pourvu d'une ou plusieurs lèvres d'étanchéité internes et que l'arête supérieure de ce fût soit inclinée ou biseautée vers l'intérieur pour faciliter l'engagement de la capsule dans le fût lors de l'extraction du distributeur d'eau. Or, ces caractéristiques structurelles sont en fait des éléments essentiels si l'on veut obtenir un bouchon qui soit bien étanche à l'eau et à l'air et donc parfaitement hygiénique, et qui en plus ait des propriétés d'inviolabilité.

### RÉSUMÉ DE L'INVENTION

Un premier objet de la présente invention est donc d'offrir un bouchon à obturateur de structure améliorée, du type comprenant :
- un capuchon pourvu d'une ouverture centrale;
- une jupe annulaire s'étendant dans une direction donnée tout autour de la périphérie extérieure du capuchon, cette jupe étant pourvue d'un axe central et étant conçue et dimensionnée pour se fixer au goulot du bidon;
- un fût annulaire s'étendant autour de l'ouverture centrale du capuchon dans la même direction que la jupe et coaxialement à celle-ci, l'ouverture centrale et le fût entourant celle-ci étant tous deux dimensionnés pour recevoir et guider le tube d'alimentation de la fontaine utilisée avec le bidon fermé par le bouchon; et
- une capsule fixée de façon détachable au moyen d'un mince de déchirement à même une arête libre du fût opposée à l'ouverture centrale, ladite capsule étant coaxiale au fût et conçue pour pouvoir être séparée de celui-ci lorsque le bidon fermé par le bouchon est inséré dans la fontaine, le mince de déchirement reliant le fût à la capsule étant placé dans une zone d'entrée à angle faite dans l'arête libre du fût pour, d'une part, faciliter une rupture franche du mince de déchirement lors de l'emmanchement du bouchon sur le tube d'alimentation de la fontaine et d'autre part, faciliter l'engagement de la capsule dans le fût lors de chaque extraction du tube d'alimentation, la capsule agissant alors comme obturateur, ladite capsule étant aussi pourvue de moyens de prises internes pour se fixer temporairement à l'extrémité supérieure du tube d'alimentation pendant l'écoulement de l'eau, et de moyens d'étanchéité externes pour venir fermer le fût lorsque le bidon est retiré de la fontaine, la capsule étant alors ramenée vers le fût et forcée dans celui-ci par le tube d'alimentation pendant que ce dernier s'extrait du fût, et
- le capuchon, la jupe, le fût et la capsule du bouchon étant moulés d'une seule pièce, sans soudure ni adjonction d'autre composant ou pièce amovible, caractérisé en ce que:

- la zone d'entrée à angle où se trouve le mince de déchirement de la capsule comprend une partie supérieure au mince avec un angle d'inclinaison vers l'intérieur compris entre 20 et 60° et une partie inférieure au mince avec un angle d'inclinaison vers l'intérieur compris entre 5° et 20°; et
- au moins une lèvre d'étanchéité est située sur la surface interne du fût pour améliorer l'étanchéité du bouchon en plus d'assurer un préalignement de la capsule dans le fût lors de l'extraction du tube d'alimentation.

Un autre objet de l'invention est la méthode par laquelle ce bouchon peut être fabriqué.

Ces deux objets et leurs avantages ressortiront mieux à la lecture de la description non restrictive qui suit d'un mode de réalisation préféré de l'invention, faite en se référant aux dessins annexés.

### BRÈVE PRÉSENTATION DES DESSINS

La figure 1 est une vue en perspective et en coupe d'un bouchon à obturateur selon un mode de réalisation préféré de l'invention;
la figure 2 est une vue en coupe agrandie de la partie Il entourée sur la figure 1;
la figure 3 est une vue en coupe transversale du bouchon illustré sur la figure 1;
la figure 4 est une vue en coupe agrandie de la partie gauche du fût et de la capsule du bouchon illustré sur la figure 3;
la figure 5 est une vue schématique du goulot d'un bidon pourvu du bouchon illustré sur la figure 1, lors de l'emmanchement et avant rupture du mince dans une fontaine d'eau;
la figure 6 est une vue similaire à la figure 5, montrant le bidon et son manchon une fois emmanchés dans la fontaine; et
la figure 7 est une vue similaire aux figures 5 et 6, montrant la façon dont la capsule se trouve forcée par le tube d'alimentation dans le fût du bouchon lorsque le bidon est extrait de la fontaine;
les figures 8 à 14 illustrent un moule utilisable pour la fabrication du bouchon illustré sur les figures précédentes lors des diverses phases et postes de fabrication; et
la figure 15 est une vue partielle du moule illustré sur les figures 8 à 14, agrandie pour faciliter l'identification des éléments primordiaux.

### DESCRIPTION D'UN MODE DE RÉALISATION PRÉFÉRÉ DE L'INVENTION

Le bouchon à obturateur 1 selon le mode de réalisation préféré de l'invention illustré dans les dessins annexés est destiné à être utilisé pour fermer le goulot d'un bidon d'eau conçu pour être inséré sur une fontaine à eau du type décrit dans le brevet américain US 5 222 530 ci-dessus mentionné.

Ce bouchon comprend un capuchon 3 de forme circulaire, pourvu d'une ouverture centrale 5 également circulaire.

Une jupe annuaire 7 s'étend dans une direction donnée tout autour de la périphérie extérieure du capuchon 3. Cette jupe 7 est pourvue d'un axe central A et est conçue et dimensionnée pour pouvoir se fixer au goulot du bidon. La façon dont cette fixation peut être effectuée est relativement standard et ne demande pas à être détaillée davantage.

En fait, les seuls détails qui méritent d'être précisés sont que, comme il est de pratique habituelle, la jupe est avantageusement pourvue d'une patte de traction 9 associée à un mince de déchirement fait dans la surface interne de la jupe pour permettre de déchirer celle-ci et retirer plus facilement le bouchon du goulot du bidon une fois celui-ci vidé.

De plus, la surface interne du capuchon ainsi que la paroi interne de la jupe peuvent avantageusement être pourvues aussi de bourrelets 13 et 15. Le bourrelet 13 disposé sur la surface interne du capuchon 3 est coaxial à l'ouverture 5 et est essentiellement destiné à assurer un remplissage homogène du moule utilisé pour la fabrication du bouchon lors de la phase d'injection, tel qu'il sera expliqué ci-après. Le ou les bourrelets 15 pourvus sur la surface interne de la jupe sont quant à eux destinés à améliorer l'étanchéité du bouchon aussi bien à l'air qu'à l'eau et favorisant les exigences d'hygiène requises pour le bidon.

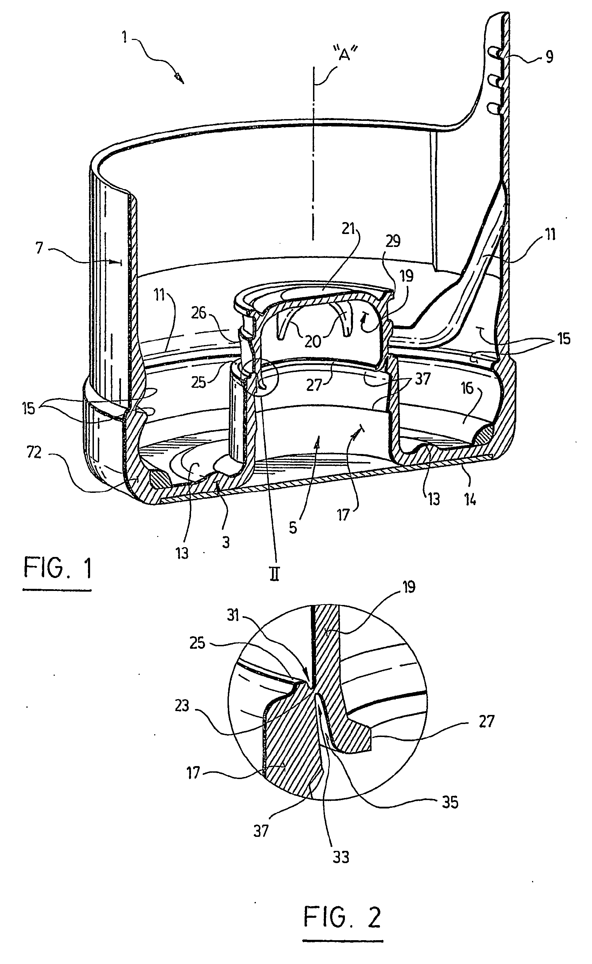

Pour garantir cette étanchéité, un joint d'étanchéité annulaire 16 peut également être utilisé à un endroit approprié, de préférence à la jonction entre le capuchon et la jupe, tel qu'il est illustré sur la figure 1. Ce joint 16 est avantageusement fait d'une résine alimentaire et fabriqué par injection, pour donner toutes les garanties de protections des propriétés organoleptiques et de pureté de l'eau du bidon.

Enfin, la surface externe du capuchon 3 peut avantageusement être pourvue d'une zone centrale abaissé de l'ordre de 0,5 mm pour permettre le positionnement d'une étiquette inamovible 14 (voir Fig. 1) dont le but est :
- d'assurer une protection contre l'introduction de corps étrangers dans la cheminée de l'ouverture centrale 5, notamment lors du stockage et du transport des bidons;
- d'assurer également une garantie d'inviolabilité à un premier niveau (le second niveau étant donné pour la rupture du mince de déchirement de la capsule comme il sera expliqué ci-après); et
- permettre une identification facilement lisible par le consommateur de la source d'eau utilisée et/ou de l'identité de l'embouteilleur.

De préférence, l'étiquette 14 est soudée plutôt que collée, de façon à éviter l'intromission de colle pouvant être non alimentaire, et exclure un risque de collage sur le bidon après enlèvement, facilitant ainsi la tache des embouteilleurs tout en abaissant le coût de nettoyage lors de retour de bidons consignés.

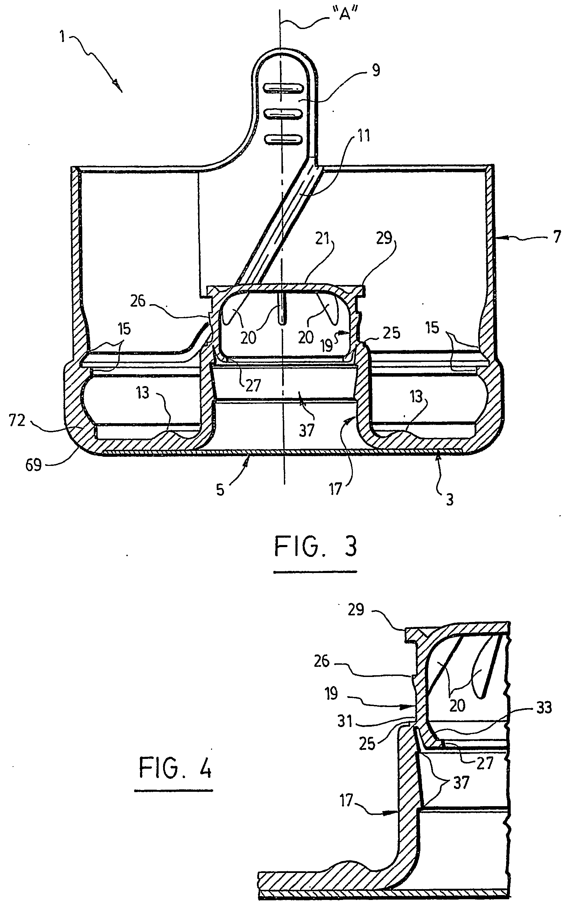

Le bouchon 1 comprend également un fût 17 ayant la forme d'un corps annulaire s'étendant autour de l'ouverture 5 du capuchon dans la même direction que la jupe 7 et coaxialement à celle-ci. En pratique, l'ouverture centrale 5 et le fût 17 entourant celle-ci sont tous deux dimensionnés de façon à recevoir et guider le tube d'alimentation de la fontaine sur laquelle le bidon fermé par le bouchon est destiné à être utilisé (voir les figures 4 à 7).

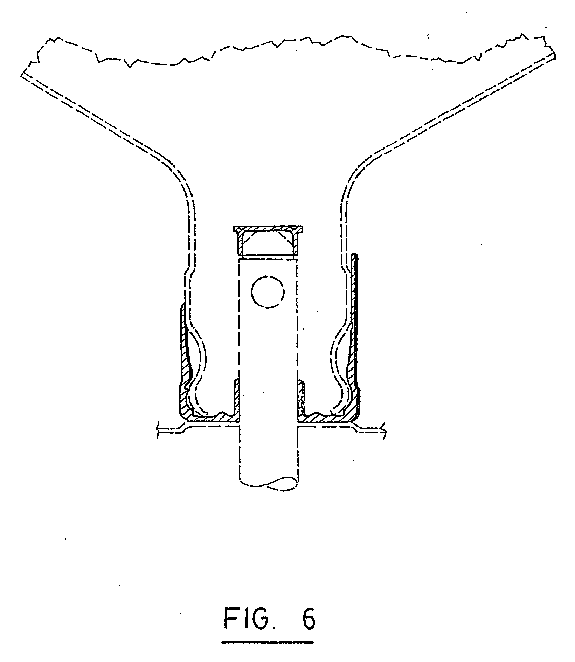

Une capsule 19 dont le dessus 21 est totalement fermé, est fixée de façon détachable au moyen d'un mince de déchirement 23 à même l'arête libre 25 du fût 17. La capsule 19 qui agit comme « obturateur », est coaxiale au fût 17 et conçue pour pouvoir être séparée de celui-ci lorsque le bidon fermé par le bouchon est emmanché sur le tube d'alimentation de la fontaine (voir la figure 6).

Tel qu'il est illustré, la capsule 19 est pourvue de moyens de prises internes 27 de préférence constituées par un clip de retenue faisant saillie radialement vers l'intérieur, de façon à pouvoir s'engager dans une rainure annulaire prévue près de l'extrémité supérieure du tube d'alimentation, tel qu'il est illustré sur les figures 4 à 7.

La capsule 19 est également pourvue d'ailettes 20 destinées à assurer un bon « centrage » de celle-ci sur l'extrémité supérieure du tube d'alimentation en usage.

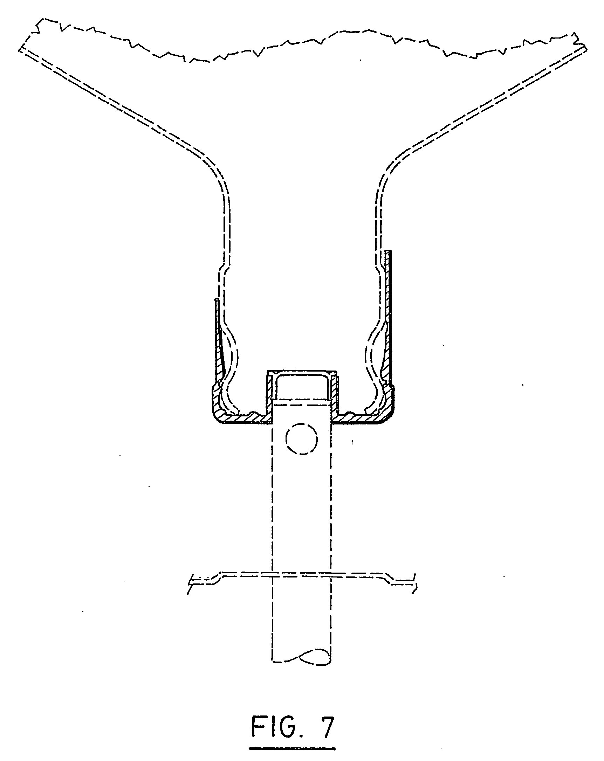

La capsule 19 est enfin pourvue d'un moyen d'étanchéité externe 29 pour venir fermer le fût 17 lorsque le bidon est retiré de la fontaine et la capsule est alors ramenée avec le tube d'alimentation et forcée par celui-ci dans le fût. Ce moyen d'étanchéité externe 29 est de préférence constitué par une collerette annulaire externe adjacente au dessus fermé 21 de la capsule 19, qui fait office de butée lors de l'extraction du bidon (voir Fig. 7) et vient prendre appui sur l'arête supérieure 25 du fût.

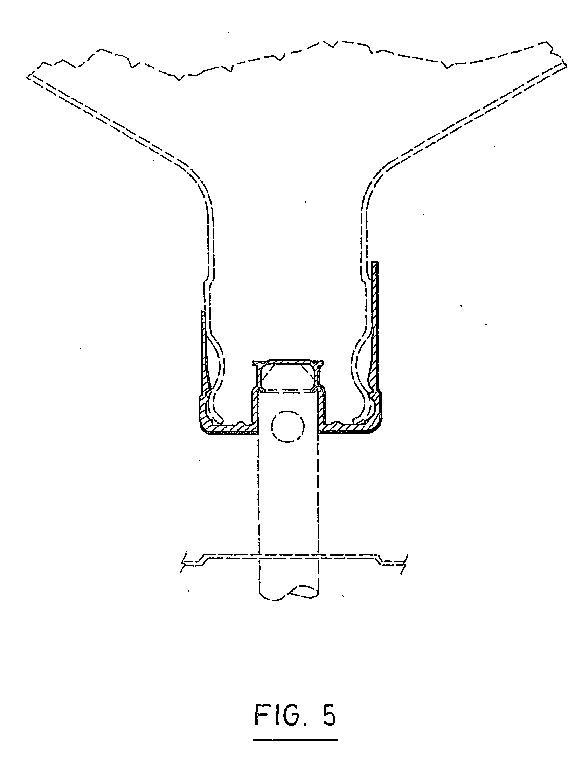

La façon dont fonctionne le bouchon à obturateur 1 tel que précédemment décrit est analogue à ce qui a déjà été décrit dans les antériorités précédemment mentionnées. A ce sujet, le lecteur peut se référer aux figures 5 à 7 annexées, qui illustrent le principe de fonctionnement de ce bouchon lorsqu'un bidon fermé par celui-ci est emmanchée dans une fontaine à eau. La figure 5 illustre le bouchon lors de l'étape d'emmanchement. La figure 6 illustre le bouchon une fois celui-ci emmanché. La figure 7 illustre la façon dont la capsule vient s'emboîter dans le fût pour ainsi refermer le bouchon de façon étanche lorsque le bidon est retiré de la fontaine.

Tel que précédemment mentionné, une première caractéristique de l'invention qui la distingue de l'art antérieur connu est le fait que le mince de déchirement 23 reliant le fût 17 à la capsule 19 est placé dans une zone d'entrée s'étendant à angle sur l'arête libre 25 du fût pour, d'une part, faciliter une rupture franche du mince de déchirement lors de l'emmanchement du bouchon sur le tube d'alimentation de la fontaine et, d'autre part, faciliter l'engagement de la capsule dans le fût lors de l'extraction du tube d'alimentation.

Plus précisément, tel qu'on le voit illustré sur les figures 2 et 4, le mince de déchirement 23 est placé dans une zone d'entrée présentant une courte partie supérieure 31 dont l'angle d'inclinaison vers l'intérieur est compris entre 20° et 60° et est de préférence de l'ordre de 45°, et une longue partie inférieure 33 dont l'angle d'inclinaison vers l'intérieur est compris entre 5° et 20° et est de préférence de l'ordre de 5°. Il convient de noter ici que ces angles pourraient légèrement varier, la seule exigence réelle étant que l'angle de la partie supérieure de la zone 31 soit plus grand que l'autre pour faciliter l'engagement de la capsule dans le fût lors de l'extraction du tube d'alimentation.

Pour faciliter cette possibilité d'engagement de la capsule dans le fût, l'arête inférieure 35 de la capsule 23 en dessous du mince de déchirement d'où s'étend radialement la lèvre annulaire 27 servant de moyen de prise interne, peut également être inclinée elle aussi vers l'intérieur (voir la figure 2).

Selon une seconde caractéristique importante de l'invention, le fût 17 est également moulé de façon à présenter une ou deux lèvres d'étanchéité 37 à même sa surface interne.

L'avantage de cette ou ces lèvres d'étanchéité 37 est que tout en conservant la fonctionnalité d'étanchéité lors de la mise en service et lors de l'emmanchement de la capsule sur le fût, elle(s) permet(tent) aussi d'assurer à l'opérateur un moindre effort de montage.

La différence de diamètre engendrée par les angles de ces lèvres d'étanchéité 37 tels qu'illustrés dans les dessins, a également l'avantage d'assurer un préalignement de la capsule dans le fût lors de l'extraction du bidon fermé par le bouchon, tel qu'il est illustré sur la figure 7.

Un autre avantage enfin de ces lèvres est qu'au moins une d'entre elles, de préférence celle disposée la plus proche de l'arête libre 25 du fût 17, peut agir comme partie d'un clip de retenue pour la capsule de façon à ainsi assurer, lors du retrait du bidon, une étanchéité extérieure. La partie périphérique externe de la capsule 19 peut aussi être pourvue d'une lèvre externe 26 coopérant avec la lèvre « supérieure » 37 pour assurer une retenue de la capsule lors d'une réinsertion du bidon dans le système d'alimentation.

Enfin, l'ensemble du bouchon 1 précédemment décrit, incluant son capuchon 3, sa jupe 7, son fût 17, sa capsule 19 et toutes les pièces afférentes telles que le bourrelet 13, les lèvres d'étanchéité 37, les bourrelets d'étanchéité 15 et autres, sont toutes moulées en une seule et unique pièce, sans avoir besoin de procéder à des soudures, collages ou autres procédés utilisés dans les méthodes de réalisation en deux pièces décrites dans l'art antérieur.

Le fait que le bouchon soit ainsi moulé en une seule et unique pièce est important puisque ceci permet d'éviter les contaminations possibles qui peuvent survenir lorsque le bouchon est fait de deux ou plusieurs pièces qui se doivent d'être stockées et manutentionnées avant d'être assemblées.

Ce moulage en une seule pièce est également important dans la mesure où il permet de donner au bouchon n'importe quelle couleur désirée, ce qui s'avère impossible lorsque le bouchon est fait de plusieurs pièces de plastique qui doivent être assemblées par soudure ou tout autre moyen.

Le bouchon 1 selon l'invention tel qu'il vient d'être décrit est donc très intéressant dans la mesure où il est fait en une seule et unique pièce de structure extrêmement « performante ».

Comme les divers autres bouchons du même type décrits dans les brevets antérieurs les plus proches, le fait que la capsule 19 détachable à l'extrémité du fût 17 soit emboîtable dans ce même fût a l'avantage de permettre le retrait du bidon de la fontaine même lorsque ce bidon n'est pas totalement vidé. Ceci peut être requis pour le nettoyage de la fontaine ou toute autre intervention de maintenance. Ceci a également l'avantage de permettre de retourner à l'embouteilleur le bidon tout en le protégeant des agents polluants ce qui, de ce fait, facilite le choix des détergents de lessivage.

En plus des avantages ci-dessus, le bouchon selon l'invention a l'avantage d'avoir un mince de déchirement cylindrique 23 de structure très efficace, disposé entre l'arête libre du fût 17 et la capsule. Contrairement au bouchon décrit dans la demande internationale WO 02/060808 A1, le bouchon selon l'invention a également l'avantage de présenter au moins une et de préférence deux lèvres d'étanchéité 37 assurant une meilleure étanchéité, un moindre effort de remontage lorsque le bidon est retiré de la fontaine et des renforts facilitant le démoulage de la pièce en rigidifiant l'intérieur du fût.

Le bouchon selon l'invention peut enfin recevoir un joint annulaire 16 pour améliorer son étanchéité, et une étiquette 14 dont les avantages ont déjà été expliqués ci-dessus.

C'est donc tout spécialement une garantie d'hygiène qu'offre le bouchon selon l'invention fait en une seule pièce et produit à partir de matière plastique agrée pour l'alimentation dans des locaux certifiés pour ce type de fourniture. Le bouchon selon l'invention permet aussi en récupérant la capsule, une obstruction à chaque retrait du bidon. Ceci est important particulièrement si le bidon n'est pas entièrement vide car cela permet d'éviter tout risque d'éclaboussure ou de contamination. Le bidon vidé, cette même sécurité de fermeture permet, lors du retour à l'embouteilleur, d'assurer un nettoyage standard avant réutilisation, sans avoir à effectuer un tri particulier.

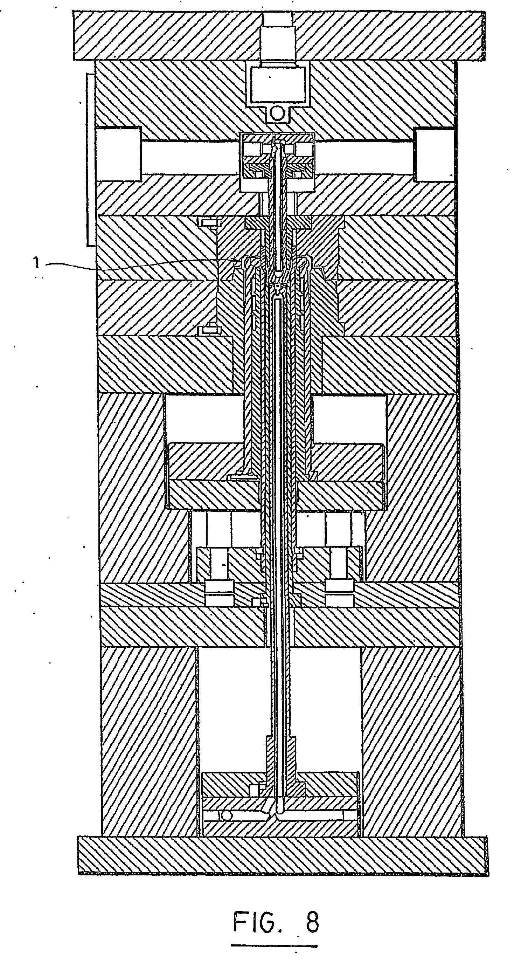

Le bouchon 1 selon l'invention peut être fabriqué par injection dans un moule dont la structure et l'opération en plusieurs phases et postes sont illustrées sur les figures 8 à 15.

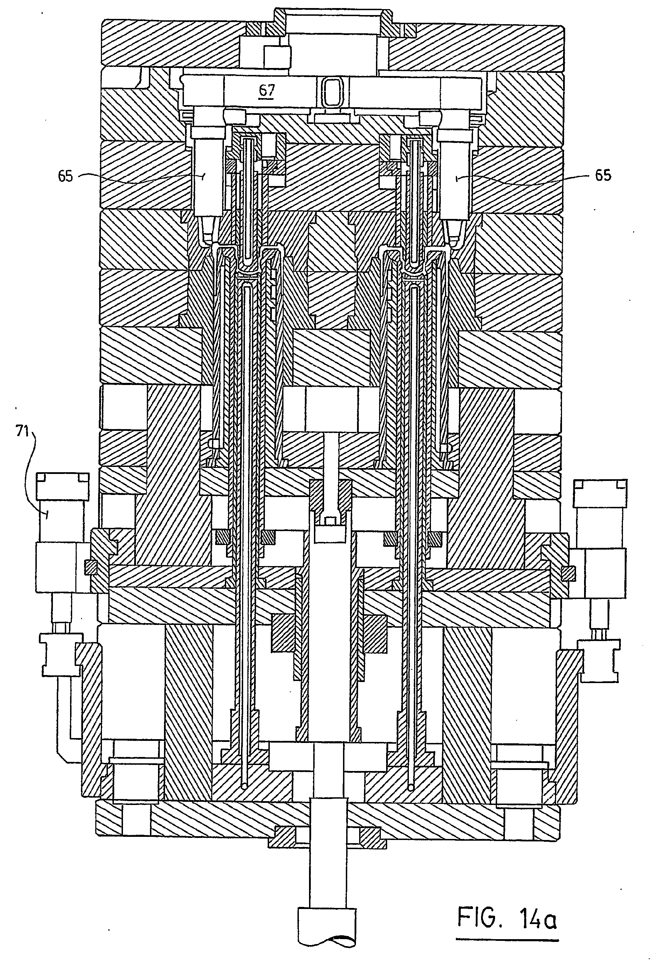

La figure 8 et la partie de gauche de la figure 14 illustrent la phase 1, poste 1. Le moule est alors fermé.

Comme on le voit mieux sur le détail cerclé de la figure 14, l'injection du bouchon 1 se fait dans une cuvette 61 située sur un rayon extérieur 63, par l'intermédiaire d'une buse chaude 65 située de côté et alimentée par un distributeur chauffé 67. L'injection se fait donc « latéralement » en un point 69 (voir Fig. 3) situé sur un bourrelet 72 formé à la jonction entre le capuchon et la jupe du bouchon.

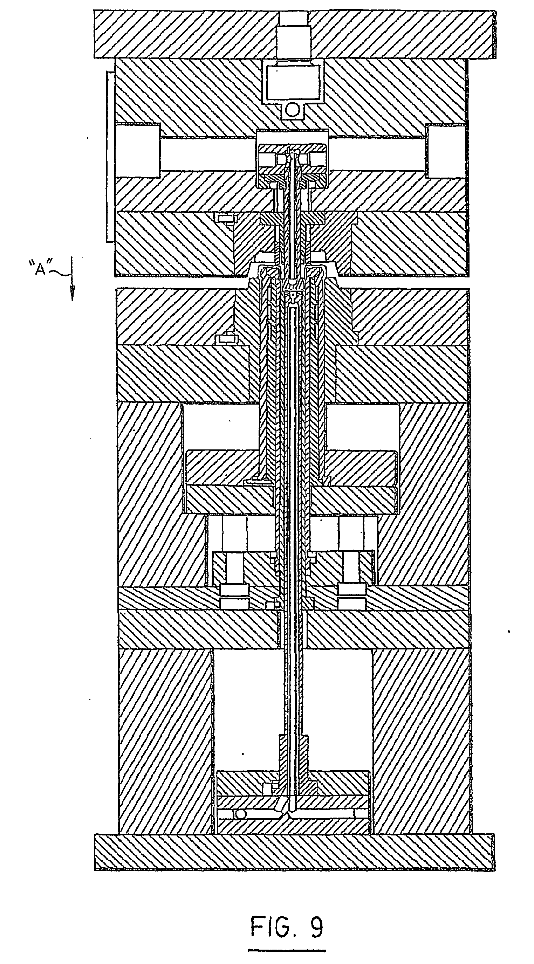

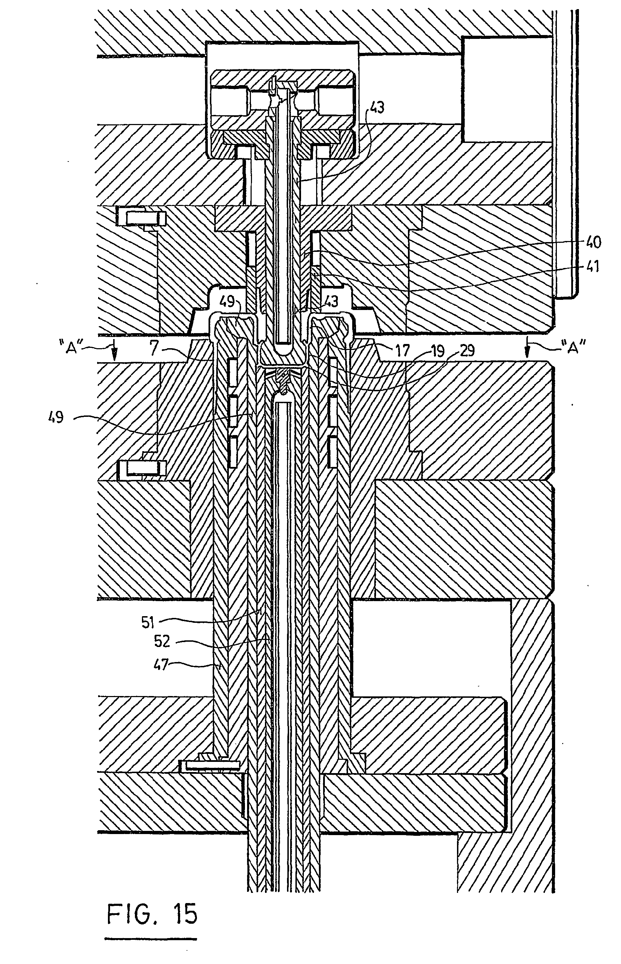

Les figures 9 et 15 illustrent la phase 1, poste 2. Dans cette position, la presse à injecter est en phase d'ouverture (voir la flèche « A » sur la fig. 15). Le fût 17 du bouchon 1 se trouve alors extrait d'une broche 40 par poussée d'un éjecteur tubulaire 41 coaxial à la broche 40. Durant ce mouvement, un noyau central 43 monté dans la broche 40 et dont l'extrémité inférieure est dans la capsule 19 du bouchon, se trouve alors avancé avec ce dernier. Ce mouvement très spécifique a pour but de ne pas détériorer ou déformer le mince de déchirement reliant le fût 17 à la capsule 19 du bouchon. Il est à noter que dans le moule de production, la broche 40 est avantageusement pourvue de moyens de réglage permettant d'optimiser l'épaisseur du mince.

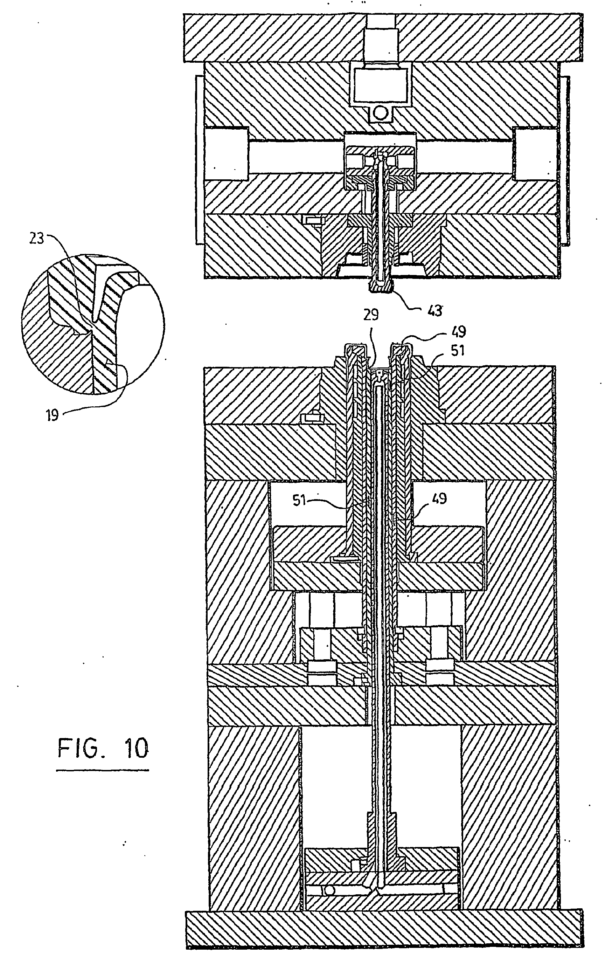

La figure 10 illustre la phase 1, poste 3. Cette phase correspond à la fin de l'ouverture de la presse à injecter. Le noyau central 43 est alors extrait de la capsule et du fût du bouchon 1. Durant cette extraction, la capsule 19 est retenue par sa collerette 29. En fait, tel qu'il est illustré (voir la fig. 15), la collerette est alors retenue prisonnière entre une soupape 49 et une broche tubulaire 51 afin de ne pas détériorer le mince 23.

Il convient de mentionner que les mouvements de la phase 1, poste 2 et de la phase 1, poste 3 sont commandés soit par des crochets mécaniques (type cylindrique ou autres) soit par des vérins hydrauliques ou pneumatiques 71, à simple ou double effet (voir fig. 14).

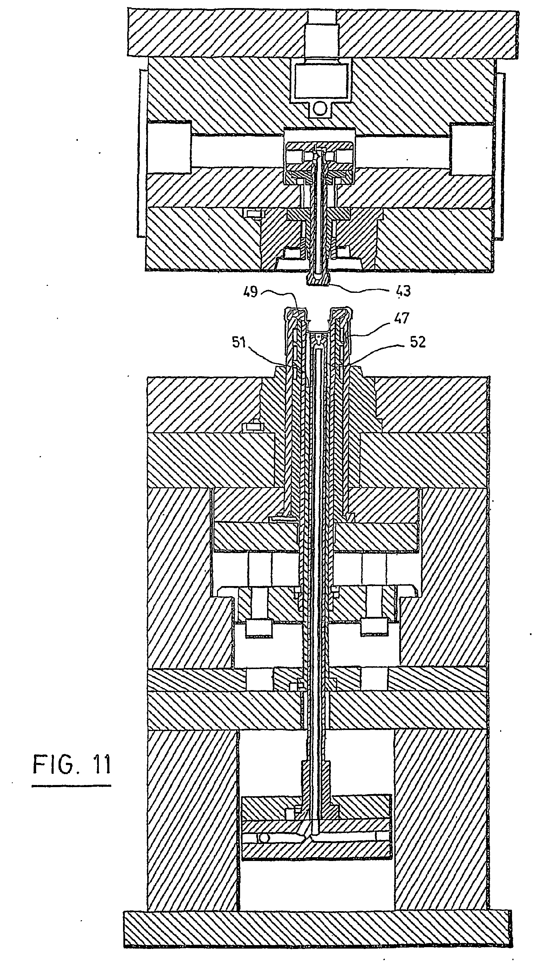

La figure 11 illustre la phase 2, poste 1, où le bouchon moulé est extrait de la cavité moulante (partie dite « mobile »). Cette extraction se fait par poussée soit d'un éjecteur machine et d'un système d'éjection à deux temps, soit par les vérins hydrauliques à simple et double effet. Il y a alors une avancée d'un noyau 47, au centre duquel se trouve montées la soupape 49, la broche tubulaire 51 et une broche centrale 52 (voir la fig. 15). Il convient de noter que la soupape 49 et la broche centrale 52 se déplacent simultanément avec le noyau 47. Toutefois, la broche tubulaire 51 reste en position afin de libérer la collerette 29 du bouchon qui était, jusqu'à ce moment, retenue prisonnière entre les pièces 49 et 51.

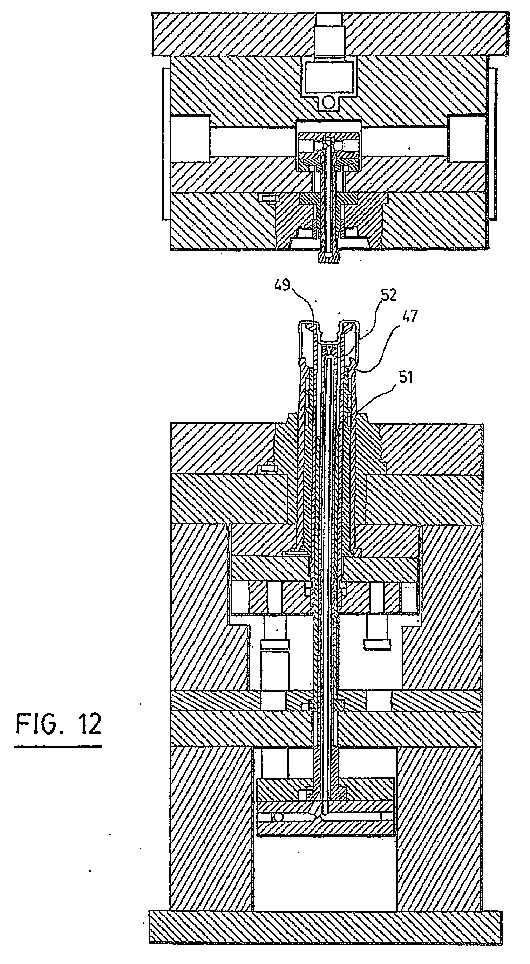

La figure 12 illustre la phase 2, poste 2. Durant cette phase, le bouchon est extrait du noyau 47. Cette extraction se fait par poussée, soit de l'éjecteur machine et d'un système d'éjection en dedans, soit par des vérins (hydrauliques ou pneumatiques) à double ou simple effet, qui font avancer la soupape 49 et la broche centrale 52. A cette poussée est ajouté simultanément de l'air comprimé afin de décomprimer et d'éviter la déformation du bouchon moulé.

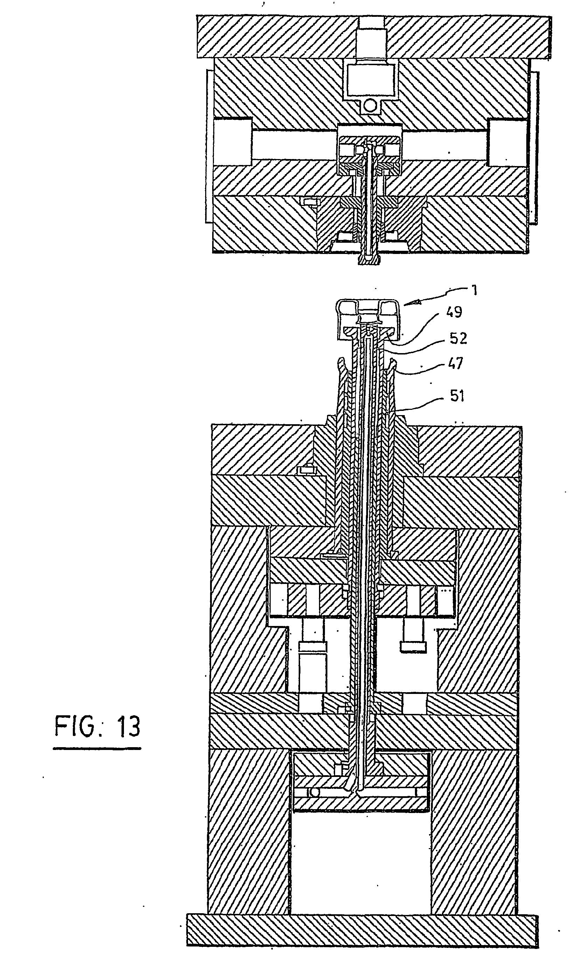

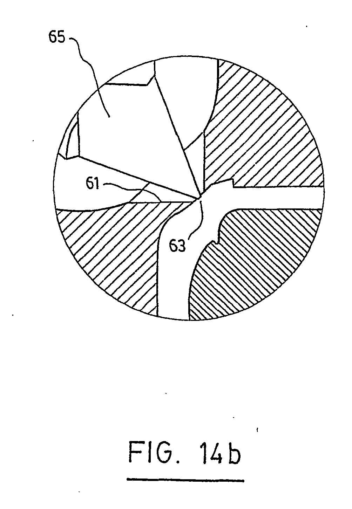

La figure 13 illustre la phase 2, poste 3. Cette phase comprend l'éjection finale du bouchon. Cette éjection se fait par une avancée de la broche centrale 52 au sein de la soupape 49, par poussée du ou des vérins pneumatiques ou hydrauliques à simple ou double effet, déjà mentionnés ci-dessus. Ceci assure l'extraction de l'ensemble du bouchon 1, incluant le fût et la capsule. Cette éjection finale peut être complétée par le programme d'air comprimé mis en action lors de la phase 2, poste 2.

La figure 14 illustre la phase 3, postes 1 et 2. Durant le poste 1 de cette phase, il y a un retour des vérins ayant exécuté la phase 2, poste 3 puis un retour en position de moulage des vérins éjecteurs. Durant le poste 2. Il y a fermeture des plateaux de la presse et mise en position remplissage injection. Le cycle de moulage est donc alors terminé.

On notera que contrairement aux autres figures précédentes, la figure 14 représente un moule à deux empreintes plutôt qu'à une seule. Ceci a été fait à titre illustratif, pour montrer qu'en usage, le nombre d'empreintes peut varier en fonction des besoins et de la capacité de la presse employée.

La méthode selon l'invention telle qu'elle a été ci-dessus détaillée peut donc se résumer comme suit.

Dans une première étape (phase 1, poste 1), on injecte la matière plastique dans une cavité moulante ayant la forme du bouchon à mouler au moyen d'une buse 65 placée de côté par rapport à ladite cavité, l'injection s'effectuant latéralement en un point 69 situé sur le bourrelet 72 formé par le capuchon et la jupe annulaire.

La cavité moulante en question est située dans un moule comprenant une partie dite « fixe » pourvue d'un système de pièces déplaçables axialement, ce système incluant :
- une broche tubulaire 40 ayant une périphérie inférieure externe servant de support de moulage à la surface interne du fût 17;
- un éjecteur tubulaire 41 coaxialement monté à l'extérieur de la broche tubulaire 40; et
- un noyau central 43 coaxialement monté à l'intérieur de la broche tubulaire 40 et ayant une extrémité inférieure servant de support de moulage à la surface interne de la capsule 19.

Le moule comprend également une partie dite « mobile » pourvue d'un autre système de pièces déplaçables axialement, cet autre système incluant :
- un autre noyau 47 ayant une périphérie supérieure externe servant de support de moulage à la surface interne de la jupe 7;
- une soupape 49 coaxialement montée à l'intérieur de l'autre noyau 47, cette soupape ayant une arête supérieure et une périphérie supérieure interne servant de support de moulage aux surfaces externes du fût 17 et de la capsule 19 et à une partie des moyens d'étanchéité externe (*viz.* la collerette 29) de la capsule;
- une autre broche tubulaire 51 coaxialement montée à l'intérieur de la soupape 49, cette autre broche tubulaire ayant une arête supérieure servant de support de moulage à une autre partie des moyens d'étanchéité externe 29 de la capsule; et
- une broche centrale 52 coaxialement montée dans l'autre broche tubulaire 51, cette broche centrale ayant une surface supérieure servant de support de moulage à la surface externe de la capsule.

Le moule comprend en outre des moyens d'action (71 et autres non illustrés) pour séparer les parties dites « fixe » et « mobile » du moule et pour pousser ou tirer selon le cas les pièces déplaçables de ces parties.

On comprendra bien sûr que lors de cette première étape d'injection, les parties dites fixe et mobile du moule se trouvent en position adjacente pour compléter et fermer la cavité moulante.

Dans une seconde étape de la méthode (phase 1, poste 2), on amorce une séparation entre la partie dite fixe et la partie dite mobile du moule tout en retenant la broche tubulaire 40, ce qui libère la surface interne du fût, et en permettant au noyau central 43 de rester dans la capsule 19 et se déplacer avec celle-ci.

Dans une troisième étape (phase 1, poste 3), on poursuit et active la séparation entre la partie dite fixe et la partie dite mobile du moule de façon à obtenir une extraction du noyau central 43 hors de la capsule 19 et du fût 17, le bouchon se trouvant alors retenu sur la partie dite mobile par ses moyens d'étanchéité externe (*viz*. sa collerette 29).

Dans une quatrième étape (phase 2, poste 1), on actionne alors l'autre noyau 47 simultanément avec la soupape 49 et la broche centrale 52 pour extraire le bouchon de la partie dite mobile du moule, l'extraction s'effectuant en maintenant l'autre broche tubulaire 51 en position, de façon à ainsi libérer les moyens d'étanchéité externe de la capsule (*viz.* la collerette 29) de la partie dite mobile du moule.

Dans une cinquième étape (phase 2, poste 2), on actionne la soupape 49 et la broche centrale 52 pour extraire le bouchon de l'autre noyau 47, cette extraction libérant la jupe 7 du bouchon.

Dans une sixième étape (phase 2, poste 3), on actionne la broche centrale 52 pour l'avancer à l'intérieur de la soupape 49, ceci assurant une extraction de l'ensemble du bouchon.

Enfin, dans une septième et dernière étape, on ramène les pièces et parties à leur position d'origine pour pouvoir amorcer le moulage d'un autre bouchon.

La description qui précède, faite phase par phase, du fonctionnement du moule utilisé pour l'injection du bouchon en une seule pièce permet à tout expert en la matière de comprendre comment les inventeurs ont résolu les problèmes évoqués dans les brevets antérieurs, concluant soit à une difficulté de fabrication entraînant un coût élevé, soit, plus catégoriquement, à l'impossibilité de réalisation (voir notamment le brevet US 5 392 939 ci-dessus évoqué).

L'originalité du moule ci-dessus décrit et de son opération réside essentiellement dans le fait que le seuil d'injection étant décalé sur le rayon extérieur du capuchon du bouchon, un mouvement d'un second noyau central sur la partie fixe du moule devient possible. En outre, la combinaison d'un double mouvement du moule permet de prévenir la détérioration et la déformation du bouchon, en remédiant aux obstacles des contre-dépouilles.

En d'autres mots, un double mouvement d'éjection est rendu possible grâce à l'injection dans la cuvette 61 sur le rayon extérieur 63 (voir la phase 1 poste 1 tel qu'illustré sur la fig. 14). En outre, l'utilisation d'une broche 40 réglable permet d'optimiser l'épaisseur du mince de déchirement cylindrique 23.

On notera qu'en pratique, la solution retenue d'un seuil d'injection latéral situé sur le rayon extérieur du bouchon, conduit à prévoir un bourrelet 13 sur le capuchon 3 pour assurer l'équilibre de l'alimentation centrale lors de l'injection. Dans la zone de raccordement entre la partie supérieure du bouchon et la jupe est ménagé un emplacement pour un joint injecté 16 tel qu'il a été mentionné ci-dessus. Ce joint est garant de l'étanchéité, du goût et de la qualité du contenu de ce bidon.

Il va de soi que diverses autres modifications pourraient être apportées au bouchon à obturateur ci-dessus décrit et illustré et sa méthode de fabrication, sans sortir du cadre de la présente invention telle que décrite ci-dessus.

## Revendications

1. Un bouchon à obturateur (1) pour bidon destiné à être utilisé en position renversée sur une fontaine pourvue d'un système d'alimentation incluant un tube d'alimentation, ledit bouchon (1) comprenant :
- un capuchon (3) pourvu d'une ouverture centrale (5);
- une jupe annulaire (7) s'étendant dans une direction donnée tout autour de la périphérie extérieure du capuchon (3), cette jupe (7) étant pourvue d'un axe central (A) et étant conçue et dimensionnée pour se fixer au goulot du bidon;
- un fût annulaire (17) s'étendant autour de l'ouverture centrale (5) du capuchon (3) dans la même direction que la jupe (7) et coaxialement à celle-ci, l'ouverture centrale (5) et le fût (17) entourant celle-ci étant tous deux dimensionnés pour recevoir et guider le tube d'alimentation de la fontaine utilisée avec le bidon fermé par le bouchon (1); et
- une capsule (19) fixée de façon détachable au moyen d'un mince de déchirement (23) à même une arête libre (25) du fût (17) opposée à l'ouverture centrale (5), ladite capsule (19) étant coaxiale au fût (17) et conçue pour pouvoir être séparée de celui-ci lorsque le bidon fermé par le bouchon (1) est inséré dans la fontaine, le mince de déchirement (23) reliant le fût (17) à la capsule (19) étant placé dans une zone d'entrée à angle faite dans l'arête libre du fût (17) pour, d'une part, faciliter une rupture franche du mince de déchirement (23) lors de l'emmanchement du bouchon (1) sur le tube d'alimentation de la fontaine et d'autre part, faciliter l'engagement de la capsule (19) dans le fût (17) lors de chaque extraction du tube d'alimentation, la capsule (19) agissant alors comme obturateur, ladite capsule (19) étant aussi pourvue de moyens de prises internes (27) pour se fixer temporairement à l'extrémité supérieure du tube d'alimentation pendant l'écoulement de l'eau, et de moyens d'étanchéité externes (29) pour venir fermer le fût (17) lorsque le bidon est retiré de la fontaine, la capsule (19) étant alors ramenée vers le fût (17) et forcée dans celui-ci par le tube d'alimentation pendant que ce dernier s'extrait du fût (17), et
- le capuchon (3), la jupe (7), le fût (17) et la capsule (19) du bouchon (1) étant moulés d'une seule pièce, sans soudure ni adjonction d'autre composant ou pièce amovible,
**caractérisé en ce que**:
- la zone d'entrée à angle où se trouve le mince de déchirement (23) de la capsule (19) comprend une courte partie supérieure (31) au mince avec un angle d'inclinaison vers l'intérieur compris entre 20 et 60° et une longue partie inférieure (33) au mince avec un angle d'inclinaison vers l'intérieur compris entre 5° et 20°; et
- au moins une lèvre d'étanchéité (37) est située sur la surface interne du fût (17) pour améliorer l'étanchéité du bouchon (1) en plus d'assurer un préalignement de la capsule (19) dans le fût (17) lors de l'extraction du tube d'alimentation.

2. Le bouchon (1) selon la revendication 1, **caractérisé en ce que** la courte partie supérieure (31) au mince a un angle d'inclinaison vers l'intérieur de l'ordre de 45°.

3. Le bouchon (1) selon la revendication 1 ou 2, **caractérisé en ce que** la longue partie inférieure (33) au mince a un angle d'inclinaison vers l'intérieur de l'ordre de 5°.

4. Le bouchon (1) selon l'une quelconque des revendications 1 à 3, **caractérisé en ce que** la jupe (7) est pourvue une patte de traction (9) associée à un autre mince de déchirement fait dans la surface interne de la jupe (7) pour permettre de déchirer celle-ci et retirer plus facilement le bouchon (1) du goulot du bidon.

5. Le bouchon (1) selon l'une quelconque des revendications 1 à 4, **caractérisé en ce que** la jupe (7) a une surface interne pourvue d'au moins un bourrelet (15) disposé pour améliorer l'étanchéité du bouchon (1) une fois celui-ci installé à même le goulot du bidon.

6. Le bouchon (1) selon l'une quelconque des revendications 1 à 5, **caractérisé en ce que** le capuchon (3) a une surface externe pourvue d'une zone centrale en retrait pour permettre le positionnement d'une étiquette (14) assurant une fermeture de l'ouverture centrale (5) avant usage.

7. Le bouchon (1) selon la revendication 6. **caractérisé en ce que** l'étiquette (14) positionnée dans la zone centrale en retrait de le capuchon (3) est fixée par soudure.

8. Le bouchon (1) selon l'une quelconque des revendications 1 à 7, **caractérisé en ce qu'**il comprend en outre un joint d'étanchéité annulaire (16) positionné à la jonction interne entre le capuchon (3) et la jupe (7).

9. Le bouchon (1) selon l'une quelconque des revendications 1 à 8, **caractérisé en ce que** le capuchon (3) et la jupe annulaire (7) forment, à leur jonction, un bourrelet (72) permettant une injection de matière plastique située sur un rayon extérieur au capuchon (3).

10. Une méthode de fabrication d'un bouchon obturateur (1) selon la revendication 9. **caractérisée en ce qu'**elle comprend les étapes successives suivantes :
(1) on injecte la matière plastique dans une cavité moulante ayant la forme du bouchon (1) à mouler au moyen d'une buse (65) placée de côté par rapport à ladite cavité, l'injection s'effectuant latéralement en un point (69) situé sur le bourrelet (72) formé par le capuchon (3) et la jupe annulaire (7), ladite cavité moulante étant située dans un moule comprenant :
a) une partie dite «fixe» pourvue d'un système de pièces déplaçables axialement, ce système incluant :
- une broche tubulaire (40) ayant une périphérie inférieure externe servant de support de moulage à la surface interne du fût (17);
- un éjecteur tubulaire (41) coaxialement monté à l'extérieur de la broche tubulaire (40); et
- un noyau central (43) coaxialement monté à l'intérieur de la broche tubulaire (40) et ayant une extrémité inférieure servant de support de moulage à la surface interne de la capsule (19); et
b) une partie dite « mobile » pourvue d'un autre système de pièces déplaçables axialement, cet autre système incluant :
- un autre noyau (47) ayant une périphérie supérieure externe servant de support de moulage à la surface interne de la jupe (7);
- une soupape (49) coaxialement montée à l'intérieur de l'autre noyau (47), cette soupape (49) ayant une arête supérieure et une périphérie supérieure interne servant de support de moulage aux surfaces externes du fût (17) et de la capsule (19) et à une partie des moyens d'étanchéité externe (29) de la capsule (19);
- une autre broche tubulaire (51) coaxialement montée à l'intérieur de la soupape (49), cette autre broche tubulaire (51) ayant une arête supérieure servant de support de moulage à une autre partie des moyens d'étanchéité externe (29) de la capsule (19);
- une broche centrale (52) coaxialement montée dans l'autre broche tubulaire (51), cette broche centrale (52) ayant une surface supérieure servant de support de moulage à la surface externe de la capsule (19); et
c) des moyens d'action (71) pour séparer les parties dites fixe et mobile du moule et pour pousser ou tirer selon le cas lesdites pièces déplaçables des parties dites fixe et mobile du moule;
d) lesdites parties dites fixe et mobile du moule se trouvant en position adjacente lors de l'injection pour compléter et verrouiller la cavité moulante;
(2) on amorce une séparation entre la partie dite fixe et la partie dite mobile du moule tout en retenant la broche tubulaire (40), ce qui libère la surface interne du fût (17), et en permettant au noyau central (43) de rester dans la capsule (19) et se déplacer avec celle-ci;
(3) on poursuit la séparation entre la partie dite fixe et la partie dite mobile du moule de façon à obtenir une extraction du noyau central (43), hors de la capsule (19) et du fût (17), le bouchon (1) se trouvant alors retenu dans la partie dite mobile du moule par ses moyens d'étanchéité externe;
(4) on actionne l'autre noyau (47) simultanément avec la soupape (49) et la broche centrale (52) pour extraire le bouchon (1) de la partie dite mobile du moule, cette extraction s'effectuant en maintenant l'autre broche tubulaire (51) en position, de façon à ainsi libérer les moyens d'étanchéité externe de la capsule (19) de la partie dite mobile du moule;
(5) on actionne ensuite la soupape (49) et la broche centrale (52) pour extraire le bouchon (1) de l'autre noyau (47), cette extraction libérant la jupe (7) du bouchon (1);
(6) on actionne la broche centrale (52) pour l'avancer à l'intérieur de la soupape (49), ceci assurant une extraction de l'ensemble du bouchon (1); et
(7) on ramène les pièces et parties à leur position d'origine pour pouvoir amorcer le moulage d'un autre bouchon (1).

## Claims

1. An obturation cap (1) for a liquid container intended to be used in upside down position in a liquid dispenser provided with a feeding system including a feed tube, said cap (1) comprising :
- a lid (3) provided with a central opening (5);
- an annular skirt (7) extending in a given direction all around an external periphery of the lid (3), said skirt (7) being provided with a central axis (A) and being devised and sized to be connected to the neck of the container;
- an annular sleeve (17) extending all around the central opening (5) of the lid (3) in the same direction as the skirt (7) and coaxially therewith, the central opening (5) and the sleeve (17) surrounding the same being both sized to receive and guide the feed tube of the liquid dispenser used with the container closed by the cap (1); and
- a plug (19) fixed in a detachable manner by means of a frangible connection (23) to a free edge (25) of the sleeve (1 7) opposite to the central opening (5), said plug (19) being coaxial to the sleeve (17) and devised to be separated from the same when the container closed by the cap (1) is inserted into the liquid dispenser, the frangible connection (23) between the sleeve (17) and the plug (19) being located in an angularly oriented inlet zone made in the free edge of the sleeve (17) for, on one hand, facilitating tearing of the frangible connection (23) during insertion of the cap (1) onto the feed tube of the liquid dispenser and, on the other hand, facilitating engagement of the plug (19) within the sleeve (17) during extraction of the feed tube, the plug (19) then acting as an obturator, said plus (19) being also provided with internal gripping means (27) for fixing it temporarily to an upper end of the feed tube during water flow, and with external sealing means (29) for closing the sleeve (17) when the container is removed from the liquid dispenser, the plug (19) being then pulled back to the sleeve (1 7) and forced into the same by the feed tube while the same is extracted from the sleeve (17),
- the lid (3), the skirt (7), the sleeve (17) and the plug (19) of the cap (1) being molded in one piece without welding or adjunction of additional component or removable piece,
**characterized in that**:
- the angularly oriented inlet zone where is located the frangible connection (23) between the sleeve (17) and the plug (19) comprises a short portion (31) above the frangible connection with an inwardly oriented inclination angle ranging from 20° to 60° and a long portion (33) below the frangible connection with an inwardly oriented inclination angle ranging from 5° to 20°; and
- at least one sealing tongue (37) is located on the inner surface of the sleeve (17) to improve sealing of the cap (1) and ensure a prealignment of the plug (19) within the sleeve (17) during extraction of the feed tube.

2. The cap (1) according to claim 1, **characterized in that** the short portion (31) above the frangible connection has an inwardly oriented inclination angle of about 45°.

3. The cap (1) according to claim 1 or 2, **characterized in that** the long portion (33) below the frangible connection has an inwardly oriented inclination angle of about 45°.

4. The cap (1) according to any one of claims 1 to 3, **characterized in that** the skirt (7) is provided with a pulling tab (9) associated to a frangible line made in the internal surface of the skirt (7) to allow tearing of said skirt and thus to facilitate removal of the cap from the neck of the container,

5. The cap (1) according to any one of claims 1 to 4, **characterized in that** the skirt (7) has an internal surface provided with at least one rim (1 5) positioned to improve water tightness of the cap (1) once said cap has been mounted onto the neck of the bottle.

6. The cap (1) according to any one of claims 1 to 5, **characterized in that** the lid (3) has an external surface provided with a central zone forming a recess to allow positioning of a seal (1 4) to close the central opening (5) before use.

7. The cap (1) according to claim 6, wherein the seal (14) positioned in the central zone of the lid (3) is attached to it by welding.

8. The cap (1) according to any one of claims 1 to 7 **characterized in that** it further comprises an annular sealing joint (16) positioned at an internal junction between the lid (3) and the skirt (7).

9. A cap (1) according to any one of claims 1 to 8, **characterized in that** the lid (3) and the annular skirt (7) together have a junction forming a rim (72) allowing injection of plastic material from an external radius of the lid (3).

10. A method for manufacturing an obturation cap (1) according to claim 9, **characterized in that** it comprises the following successive steps:
(1) injecting a plastic material in a molding cavity in the form of the cap (1) to be molded by means of an injector (65) located laterally with respect to said cavity, the injection being carried out laterally at a point (69) located onto the rim (72) formed by the lid (3) and the annular skirt (7) at their junction, said molding cavity being located in a mold comprising:
(a) a first part hereinafter called "fixed part", which is provided with a plurality of axially movable elements, said elements including:
- a tubular member (40) having an external lower periphery acting as a molding support on the internal surface of the sleeve (17);
- an ejecting ring (41) coaxially mounted externally around the tubular member (40); and
- a central core (43) coaxially mounted inside the tubular member (40), said central core having a lower end acting as an internal molding support for the plug (19); and
(b) a second part hereinafter called "moving part", which is provided with a plurality of other axially movable elements, said other elements including:
- another core (47) having an external upper periphery acting as an internal molding support for the skirt (7) of the cap (1);
- a socket (49) coaxially mounted inside the other core (47), said socket (49) having an upper edge and an upper internal periphery acting as an external molding support for the sleeve (17) and the plug (19) of the cap and for one part of the external sealing means (29) of said plug (19);
- another tubular member (51) coaxially mounted inside the socket (49), said other tubular member (51) having an upper edge acting as a molding support for another part of the external sealing means (29) of the plug (19) of the cap; and
- a central member (52) coaxially mounted inside the other tubular member (51), said central member (52) having an upper surface acting as an external molding support for the plug (19);
(c) actuating means (71) for separating the fixed and movable parts of the mold and for pushing and pulling the above mentioned movable elements of said fixed and movable parts of the mold;
(d) said fixed and movable parts of the mold being in adjacent position during injection for completing and closing the molding cavity;
(2) starting a separation of the fixed and the moving part of the mold while holding the central member (40) in original position, thereby removing an internal support from the sleeve (1 7) while allowing the central core (43) to remain within the plug (1 9) and move therewith;
(3) continuing separation of the fixed part and the moving part of the mold in order to obtain extraction of the central core (43) from the plug (1 9) and the sleeve (17), the cap (1) being then held within the moving part of the mold by means of its external sealing means;
(4) actuating the other core (47) simultaneously with the socket (49) and the central member (52) to extract the cap (1) from the moving part of the mold, such an extraction being carried out while maintaining the other tubular member (51) in original position so as to liberate the external sealing means of the plug (19) from the moving part of the mold;
(5) subsequently actuating the socket (49) and the central member (52) for extracting the cap (1) from the other core (47), said extraction liberating the skirt (7) of the cap (1);
(6) actuating the central member (52) to move it within the socket (49) in order to extract the whole cap (1); and
(7) bringing all the movable elements and parts to their original position to start manufacturing another obturation cap (1).

## Patentansprüche

1. Verschlussstopfen (1) für einen Kanister, der für den Einsatz in umgekehrter Stellung auf einem Wasserspender bestimmt ist, der mit einem Versorgungssystem einschließlich Versorgungsrohr ausgestattet ist, wobei dieser Stopfen (1) umfasst:
- eine Verschlusskappe (3) mit einer zentralen Öffnung (5);
- einen ringförmigen Mantel (7), der sich in einer gegebenen Richtung ganz um die äußere Peripherie der Verschlusskappe (3) herum erstreckt, wobei dieser Mantel (7) eine zentrale Achse (A) hat und so konzipiert und dimensioniert ist, dass er um den Hals des Kanisters fest anliegt;
- eine ringförmige Hülse (17), die sich um die zentrale Öffnung (5) der Verschlusskappe (3) herum in die gleiche Richtung erstreckt wie der Mantel (7) und zu diesem koaxial ist, wobei die zentrale Öffnung (5) und die diese umgebende Hülse (17) beide so dimensioniert sind, dass sie das Versorgungsrohr des Wasserspenders aufnehmen und führen, der mit dem von dem Stopfen (1) verschlossenen Kanister verwendet wird; und
- eine Kapsel (19), die mittels einer dünnen Abreißstelle (23) bündig mit einem freien Rand (25) der Hülse (17) abnehmbar befestigt ist, welcher der zentralen Öffnung (5) gegenüber liegt, wobei diese Kapsel (19) mit der Hülse (17) koaxial ist und so konzipiert ist, dass sie von dieser getrennt werden kann, wenn der mit dem Stopfen (1) verschlossene Kanister auf den Wasserspender aufgesetzt wird, wobei die dünne Abreißstelle (23), die die Hülse (17) mit der Kapsel (19) verbindet, in einem abgewinkelten Eingangsbereich angeordnet ist, der an dem freien Rand der Hülse (17) vorgesehen ist, um einerseits einen glatten Bruch der dünnen Abreißstelle (23) beim Aufstecken des Stopfens (1) auf das Versorgungsrohr des Spenders zu erleichtern, und andererseits das Eingreifen der Kapsel (19) in die Hülse (17) bei jedem Herausziehen des Versorgungsrohrs zu erleichtern, wobei die Kapsel (19) dann als Verschluss wirkt, wobei diese Kapsel (19) auch mit innen liegenden Greifvorrichtungen (27) versehen ist, um vorübergehend am oberen Ende des Versorgungsrohrs fest zu sitzen, während das Wasser abfließt, sowie mit außen liegenden Dichtungsmitteln (29), um die Hülse (17) zu verschließen, wenn der Kanister vom Spender abgenommen wird, wobei die Kapsel (19) dann zur Hülse (17) hin geführt und durch das Versorgungsrohr in diese gedrückt wird, während letzteres aus der Hülse (17) herausgezogen wird, und
- wobei die Verschlusskappe (3), der Mantel (7), die Hülse (17) und die Kapsel (19) des Stopfens (1) aus einem einzigen Stück geformt sind, ohne Schweißen oder Anfügen anderer Komponenten oder abnehmbarer Teile,
**dadurch gekennzeichnet, dass:**
- der abgewinkelte Eingangsbereich, in dem sich die dünne Abreißstelle (23) der Kapsel (19) befindet, einen kurzen Teil (31) über der dünnen Abreißstelle mit einem Neigungswinkel nach innen zwischen 20 und 60° umfasst, und einen langen Teil (33) unter der dünnen Abreißstelle mit einem Neigungswinkel nach innen zwischen 5° und 20°; und
- mindestens eine Dichtlippe (37) auf der Innenfläche der Hülse (17) angeordnet ist, um die Dichtigkeit des Stopfens (1) zu verbessern und darüber hinaus eine Vor-Justierung der Kapsel (19) in der Hülse (17) beim Herausziehen des Versorgungsrohrs zu gewährleisten.

2. Stopfen (1) nach Anspruch 1, **dadurch gekennzeichnet, dass** der kurze Teil (31) über der dünnen Abreißstelle einen Neigungswinkel nach innen in der Größenordnung von 45° hat.

3. Stopfen (1) nach Anspruch 1 oder 2, **dadurch gekennzeichnet, dass** der lange Teil (33) unter der dünnen Abreißstelle einen. Neigungswinkel nach innen in der Größenordnung von 5° hat.

4. Stopfen (1) nach einem der Ansprüche 1 bis 3, **dadurch gekennzeichnet, dass** der Mantel (7) mit einer Reißlasche (9) versehen ist, die zu einer anderen dünnen Abreißstelle gehört, die in der Innenfläche des Mantels (7) ausgeführt ist, damit dieser aufgerissen werden und der Stopfen (1) leichter von dem Hals des Kanisters abgezogen werden kann.

5. Stopfen (1) nach einem der Ansprüche 1 bis 4, **dadurch gekennzeichnet, dass** der Mantel (7) eine Innenfläche hat, die mit mindestens einem Wulst (15) versehen ist, der so angeordnet ist, dass die Dichtigkeit des Stopfens (1) verbessert wird, sobald dieser auf den Hals des Kanisters aufgesteckt ist.

6. Stopfen (1) nach einem der Ansprüche 1 bis 5, **dadurch gekennzeichnet, dass** die Verschlusskappe (3) eine Außenfläche hat, die mit einem vertieften zentralen Bereich versehen ist, um das Anbringen eines Schildes (14) zu ermöglichen, das vor der Verwendung ein Verschließen der zentralen Öffnung gewährleistet.

7. Stopfen (1) nach Anspruch 6, **dadurch gekennzeichnet, dass** das Schild (14), das in dem vertieften zentralen Bereich der Verschlusskappe (3) angebracht ist, durch Schweißen befestigt ist.

8. Stopfen (1) nach einem der Ansprüche 1 bis 7, **dadurch gekennzeichnet, dass** er außerdem eine ringförmige Dichtung (16) umfasst, die an der internen Verbindungsstelle zwischen der Verschlusskappe (3) und dem Mantel (7) angebracht ist.

9. Stopfen (1) nach einem der Ansprüche 1 bis 8, **dadurch gekennzeichnet, dass** die Verschlusskappe (3) und der ringförmige Mantel (7) an ihrer Verbindungsstelle einen Wulst (72) bilden, der ein Einspritzen von Kunststoff ermöglicht, der auf einem Außenkreis an der Verschlusskappe (3) angeordnet ist.

10. Herstellungsverfahren für einen Verschlussstopfen (1) nach Anspruch 9, **dadurch gekennzeichnet, dass** es folgende sukzessive Schritte umfasst:
(1) man spritzt den Kunststoff in einen Form-Hohlraum, der die Form des zu bildenden Stopfens (1) hat, mittels einer Düse (65), die bezogen auf diesen Hohlraum seitlich angeordnet ist, wobei das Einspritzen seitlich an einem Punkt (69) erfolgt, der sich auf dem Wulst (72) befindet, der von der Verschlusskappe (3) und dem ringförmigen Mantel (7) gebildet wird, wobei dieser Form-Hohlraum in einer Gießform liegt, die umfasst:
(a) einen sogenannten "festen" Bereich, der mit einem System axial verschiebbarer Teile ausgestattet ist, wobei dieses System folgendes einschließt:
- einen rohrförmigen Kernstift (40), dessen untere Außenperipherie als Gießunterlage für die Innenfläche des Schaftes (17) dient;
- einen rohrförmigen Ausstoßer (41), der an der Außenseite des rohrförmigen Kernstifts (40) koaxial montiert ist; und
- einen zentralen Kern (43), der im Innern des rohrförmigen Kernstifts (40) koaxial montiert ist und ein unteres Ende hat, das als Gießunterlage für die Innenfläche der Kapsel (19) dient; und
(b) einen sogenannten "beweglichen" Bereich, der mit einem anderen System axial verschiebbarer Teile ausgestattet ist, wobei dieses andere System folgendes einschließt:
- einen anderen Kern (47) mit einer oberen Außenperipherie, die als Gießunterlage für die Innenfläche des Mantels (7) dient;
- einen Einsatz (49), der im Inneren des anderen Kerns (47) koaxial montiert ist, wobei dieser Einsatz (49) einen oberen Rand und eine obere Innenperipherie hat, die als Gießunterlage für die Außenflächen des Schaftes (17) und der Kapsel (19) und für einen Teil der äußeren Dichtmittel (29) der Kapsel (19) dienen;
- einen anderen rohrförmigen Kernstift (51), der im Innern des Einsatzes (49) koaxial montiert ist, wobei dieser andere rohrförmige Kernstift (51) einen oberen Rand hat, der als Gießunterlage für einen anderen Teil der äußeren Dichtmittel (29) der Kapsel (19) dient; und
- einen zentralen Kernstift (52), der in dem anderen rohrförmigen Kernstift (51) koaxial montiert ist, wobei dieser zentrale Kernstift (52) eine obere Fläche hat, die als Gießunterlage für die Außenfläche der Kapsel (19) dient; und
(c) Betätigungsmittel (71) zur Trennung des sogenannten festen und des sogenannten beweglichen Bereichs der Gießform und zum Herausdrücken oder Herausziehen, je nachdem, dieser verschiebbaren Teile des sogenannten festen und des sogenannten beweglichen Bereichs der Gießform;
(d) wobei sich der sogenannte feste und der sogenannte bewegliche Bereich der Gießform beim Einspritzen in benachbarter Position befinden, um den Form-Hohlraum zu vervollständigen und abzuschließen;
(2) man leitet eine Trennung zwischen dem sogenannten festen Bereich und dem sogenannten beweglichen Bereich der Gießform ein, wobei gleichzeitig der rohrförmige Kernstift (40) festgehalten wird, was die Innenfläche der Hülse (17) freimacht, und wobei der zentrale Kern (43) in der Kapsel (19) bleiben und sich mit dieser verschieben kann;
(3) man führt die Trennung zwischen dem sogenannten festen und dem sogenannten beweglichen Bereich der Gießform in der Weise fort, dass ein Abziehen des zentralen Kerns (43) aus der Kapsel (19) und der Hülse (17) erreicht wird, wobei der Verschlussstopfen (1) dann durch seine äußeren Dichtmittel im sogenannten beweglichen Bereich der Gießform zurückgehalten wird;
(4) man betätigt den anderen Kern (47) gleichzeitig mit dem Einsatz (49) und dem zentralen Kernstift (52), um den Verschlussstopfen (1) aus dem beweglichen Bereich der Gießform abzuzichen, wobei dieses Abziehen erfolgt, indem der andere rohrförmige Kernstift (51) in seiner Stellung gehalten wird, um so die äußeren Dichtmittel der Kapsel (19) aus dem sogenannten beweglichen Bereichs der Gießform freizumachen;
(5) man betätigt anschließend den Einsatz (49) und den zentralen Kernstift (52), um den Verschlussstopfen (1) aus dem anderen Kern (47) abzuziehen, wobei dieses Abziehen den Mantel (7) des Stopfens (1) freimacht;
(6) man betätigt den zentralen Kernstift (52), um ihn im Inneren des Einsatzes (49) vorzuschieben, was ein Abziehen des ganzen Verschlussstopfens (1) gewährleistet; und
(7) man führt die Teile und Bereiche in ihre ursprüngliche Stellung zurück, um das Gießen eines anderen Verschlussstopfens (1) beginnen zu können.
